# EUROPEAN PATENT APPLICATION

(11) **EP 1 944 717 A2**
(43) Date of publication of application: **16.07.2008**
(21) Application number: 07117662.2
(22) Date of filing: 01.10.2007
(51) Int. Cl.: G06F 21/24

(54) **Encryption key rotation**

(30) Priority: 29.09.2006 US 540433
(71) Applicant: PROTEGRITY CORPORATION, Grand Cayman (KY)
(72) Inventor: Mattsson, Ulf, STAMFORD, CT 06901 (US)
(74) Representative: Lind, Urban Arvid Oskar

(57) **Abstract**

Data in data at rest system such as a database or a file system is reencrypted so that the data remains accessible during re-encryption. Various embodiments of the invention include virtual tables such as views, parallel tables, indexes that improve the speed of re-eneryption, and distributed solutions to re-encryption such as delegated of encryption to additional server(s).

## Description

### Cross-reference To Related Applications

This application is a continuation-in-part of U.S. patent application serial number 09/712,926 filed November 16, 2000. The entire contents of each of this reference is incorporated by reference herein.

### Technical Field

The present invention generally relates to methods of encrypting all or a portion of a database, file system or other data at rest system with an encryption key and more particularly, to rotating the encryption key to increase the robustness of the encryption, or allowing more than one encryption key concurrent per database column

### Background Information

In order to protect information stored in a database, it is known to encrypt that information stored in the database. The science of encryption has rapidly expanded since the 1970's, driven in large part by the growth of computing power and access to information. To recover the original or unencrypted information, it is necessary to decrypt the encrypted data. The decryption can be done with knowledge of an encryption algorithm and a specific encryption key being used. Access to the encryption keys can be limited to certain users of the database system, and different users can be given different access rights. A variety of encryption algorithms exist including Cramer-Shoup, RSA, FISH, SOBER, SOBER-128, Blowfish and Lucifer.

Despite these advances, as companies grow and connect their internal networks or Intranets to the Internet, sensitive data stored on data at rest systems such as databases or file systems face threats from both inside and outside an intranet. For example, security threats to a database or a file server may come from untrusted computers that breach security measures such as a firewall to gain access to the intranet. Also, security threats increasingly come from internal infrastructure. Such trusted computers may become compromised through viruses or other malicious software. Even more pernicious, employees of a company may attempt to access information that they are not authorized to view (e.g., customer credit card numbers) or attempt to access information in quantities for which a user has no legitimate need (e.g., accessing all customer credit card numbers). Such security breaches have been widely publicized to the embarrassment of the company and greatly damaged consumer confidence.

Encrypting whole files, tables, or databases generally involves needlessly encrypting non-sensitive data. To overcome this drawback, encryption can be performed at a smaller level such as the column level of a database instead of building walls around servers or hard drives. Such lower level approaches are commonly called granular security solutions for the encryption of databases. In granular encryption approaches a protective layer of encryption is provided around specific sensitive data-items or objects. Granular solutions help to prevent outside attacks as well as infiltration from within a server itself. Further, granular solutions allow a system manager to define which data stored in the database are sensitive and require protection. As a result, the delays and burdens on the system that may occur when employing bulk encryption techniques are minimized.

It is also known to assign different encryption keys of the same algorithm to different data columns. With multiple keys in place, intruders are prevented from gaining full access to the database even if they acquire a key since a different key protects each column of encrypted data.

### Summary of the Invention

The encryption of databases presents technical challenges that must be overcome when the technologies are implemented on an enterprise level. It is desirable to rotate or change encryption keys on a regular basis for increased protection, and/or allowing a different encryption key for each row in a database column. However, it is often undesirable and unacceptable to take a production server off-line for an extended period of time for key rotation in a 24x7 business environment. Furthermore, a production server may not have sufficient excess processing capacity to handle both routine database requests and re-encryption of data simultaneously without compromising performance. It is an object of the subject technology to overcome these obstacles in implementing key rotation encryption.

There is provided a method of encrypting at least a portion of a data at rest system with a new encryption key, the method comprising: adding a maintenance column to a base table, wherein the base table contains data to be encrypted in one or more base columns; creating a read only virtual table to act a proxy for the base table; redirecting at least one command directed to the read only virtual table to the base table; re-encrypting data of a column of the one or more base columns; inserting the re-encrypted data into the maintenance column; dropping the base column from which the data was re-encrypted; and renaming the maintenance column with the name of the deleted base column.

In a further embodiment, the data at rest system is a database. In another embodiment, redirecting at least one command comprises redirecting at least one data manipulation language command. In another embodiment, creating a read only virtual or logical table comprises creating a view composed of a result of a query of the base table. In another embodiment, redirecting at least one command comprises creating one or more triggers. In another embodiment, dropping the base column comprises deleting the base column.

Additionally, the method may further comprise executing a script for the new encryption key. In another embodiment, the script is automatically generated.

Additionally, the method may further comprise storing an index of the last row processed. In another embodiment, the method further comprises storing indexes for one or more rows to indicate which rows have been updated. In a further embodiment, the one or more indexes are stored in a separate table.

Still another embodiment of the subject invention is directed to a method of encrypting at least a portion of a data at rest system with a new encryption key, the method comprising: adding a maintenance column to a base table, wherein the base table contains data to be encrypted in a base column; creating a read only virtual table to act a proxy for the base table; redirecting at least one command directed to the read only virtual table to the base table; replicating at least one record from the base column to a rotation server; re-encrypting at least one of the at least one record; inserting the at least one re-encrypted record into the maintenance column; deleting the base column from which the data was re-encrypted; and renaming the maintenance column with the name of the deleted base column.

In a further embodiment, the method includes storing a key generation indicator directing the read only virtual table to an encryption key for each row of the base column. In an additional embodiment, the key generation indicator is selected from the group consisting of a transparent key generation indicator, a field in the base table, and data stored as a hash of the key generation indicator and the encrypted data for a record. In another embodiment, the method includes storing an integrity check value for the key generation indicator. In a further embodiment, the integrity check value may be implemented with a technology selected from the group consisting of: CRC (cyclic redundancy check), hash, MD5, SHA-1, SHA-2, HMAC (keyed-hash message authentication code), partial-hash-value and parity checks.

In another embodiment, a plurality of records are replicated to at least two rotation servers. In another embodiment, the entire base column is replicated to the rotation server. In another embodiment, the base column is replicated to the rotation server in batches. In another embodiment, the base column is replicated to the rotation server in a record-by-record mode.

Still another embodiment of the subject invention is directed to a method of altering encryption status of a first table and a second table in a relational database, the method comprising: creating a trigger to intercept insert commands for the first table; redirecting the intercepted insert commands to the second table; creating triggers to intercept update and delete commands for the first table and store the commands in a temporary table; rotating the encryption keys in the first table; and executing the commands stored in the temporary table against the first table.

Another embodiment of the subject invention is directed to a computer-readable medium whose contents cause a computer to perform a method of encrypting at least a portion of a data at rest system with a new encryption key by the steps of: adding a maintenance column to a base table, wherein the base table contains data to be encrypted in one or more base columns; creating a read only virtual table to act a proxy for the base table; redirecting at least one command directed to the read only virtual table to the base table; re-encrypting data of a column of the one or more base columns; inserting the re-encrypted data into the maintenance column; dropping the base column from which the data was re-encrypted; and renaming the maintenance column with the name of the deleted base column.

Another embodiment of the subject invention is directed to a computer-readable medium whose contents cause a computer to perform a method of encrypting at least a portion of a data at rest system with a new encryption key by the steps of: adding a maintenance column to a base table, wherein the base table contains data to be encrypted in a base column; creating a read only virtual table to act a proxy for the base table; redirecting at least one command directed to the read only virtual table to the base table; replicating at least one record from the base column to a rotation server; re-encrypting at least one of the at-least one record; inserting the at least one re-encrypted record into the maintenance column; deleting the base column from which the data was re-encrypted; and renaming the maintenance column with the name of the deleted base column.

Another embodiment of the subject invention is directed to a computer-readable medium whose contents cause a computer to perform a method of encrypting at least a portion of a data at rest system with a new encryption key by the steps of: creating a trigger to intercept insert commands for the first table; redirecting the intercepted insert commands to the second table; creating triggers to intercept update and delete commands for the first table and store the commands in a temporary table; rotating the encryption keys in the first table; and executing the commands stored in the temporary table against the first table.

Still another embodiment of the subject invention is directed to a computer-readable memory device encoded with a data structure for re-encrypting at least one base column, while allowing access to the at least one base column during re-encryption, the data structure comprising a table, the table comprising: at least one base column; and at least one maintenance column.

It should be appreciated that the present invention can be implemented and utilized in numerous ways including, without limitation, as a process, an apparatus, a system, and a device. The invention can be implemented entirely or partially in software and/or hardware. The software can be contained on or in any computer readable medium. Certain embodiments of the invention and related aspects, features, and benefits will become more readily apparent from the following description and the accompanying drawings.

### Brief Description of the Drawings

The drawings generally are to illustrate principles of the invention and/or to show certain embodiments according to the invention. The drawings are not necessarily to scale. Each drawing is briefly described below.

Figure 1 is a diagram showing a typical network environment for data at rest systems such as databases and file servers.

Figure 2 is a diagram showing a method of encrypting all or a portion of a database, file system or other data at rest system with a new encryption key.

Figure 3 is a diagram showing a database with two parallel tables and two parallel views.

Figure 4 is a diagram showing a method of re-encryption via a separate key rotation server.

### Description

In brief overview, embodiments of the present invention solve the problems described herein of regularly re-encrypting sensitive data in data at rest systems without interrupting access to the sensitive data. Various embodiments of the present invention accomplish this through the use of virtual tables such as views, parallel tables, indexes that improve the speed of re-encryption, and distributed solutions to re-encryption such as delegated of encryption to additional server(s). The following description is provided to illustrate various embodiments of the invention, but the description is not intended to limit the scope of the invention:

The present invention is generally directed to methods of encrypting all or a portion of a data at rest system with a new encryption key. Examples of such systems include relational databases and file systems. Other types of computer-based information storage and retrieval systems also fall within the meaning of a data at rest system.

Embodiments and examples herein are illustrated using Oracle^{®} SQL code, available from Oracle Int'1 Corp of Redwood City, California. The invention is not limited to either Oracle^{®} or SQL. Embodiments of the invention can be implemented in a variety of programming languages including but not limited to: DB2^{®} and Informix^{®} both available from IBM Corp. of Armonk, New York; Microsoft Jet^{®} and Microsoft SQL Server^{®} both available from the Microsoft Corp. of Redmond, Washington; MySQL^{®} available from the MySQL Ltd. Co. of Stockholm, Sweden; and Sybase^{®} available from Sybase, Inc. of Dublin, California.

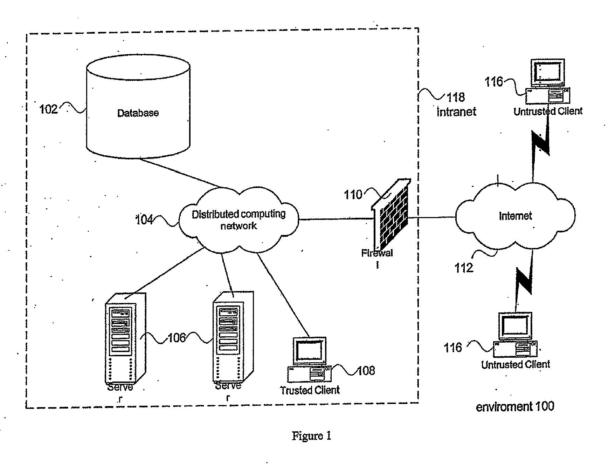

Referring now to Figure, 1, an environment 100 allows a database 102 to interact with applications that may be running on one or more servers 106 or clients, trusted 108 and untrusted 116. For simplicity, only one database 102, two servers 106, one trusted client 108 and two untrusted clients 116 are shown. The database 102, servers 106, and trusted client 108 are connected via a distributed computing network 104 via communication channels, whether wired or wireless, as is known to those of ordinary skill in the pertinent art. The distributed computing network 104 may be one or more selected from the group: LAN, WAN, Internet, Intranet, Virtual Private Network, Ethernet and the like now known and later developed. While represented schematically as part of a separate entity or enterprise 118 in Figure 1, a database 102 may be software or hardware integrated with a computer such as a server 106 or clients 108, 116.

The enterprise 118 is connected to the untrusted clients 116 via a network 112 such as the Internet. To control access to the network 104, a firewall 110 governs communication between the networks 104, 112. Firewalls 110 are well-known to those of ordinary skill in the art and, thus, not further described herein.

The servers 106 can be one or more servers known to those skilled in the art that are intended to be operably connected to a network so as to operably link to a plurality of clients 106, 208, and 116 via the distributed computer network 104. As illustration, the server 106 typically includes a central processing unit including one or more microprocessors such as those manufactured by Intel or AMD, random access memory (RAM), mechanisms and structures for performing I/O operations, a storage medium such as a magnetic hard disk drive(s), and an operating system for execution on the central processing unit. The hard disk drive of the servers 106 maybe used for storing data, client applications and the like utilized by client applications. The hard disk drives of the server 12 also are typically provided for purposes of booting and storing the operating system, other applications or systems that are to be executed on the servers 106, paging and swapping between the hard disk and the RAM.

The flow charts illustrated herein represent the structure or the logic of methods for an embodiment of a computer program according to the invention. The program is preferably executed in the environment 100. The flow charts illustrate the structures and functions of the computer program code elements (which could instead be implemented entirely or partially as one or more electronic circuits). As such, the present disclosure may be practiced in its essential embodiments by a machine component that renders the program code elements in a form that instructs a digital processing apparatus (*e.g.,* computer) to perform a sequence of function steps corresponding to those shown in the flow charts. The software and various processes discussed herein are merely exemplary of the functionality performed by the disclosed technology and thus such processes and/or their equivalents may be implemented in commercial embodiments in various combinations and quantities without materially affecting the operation of the disclosed technology.

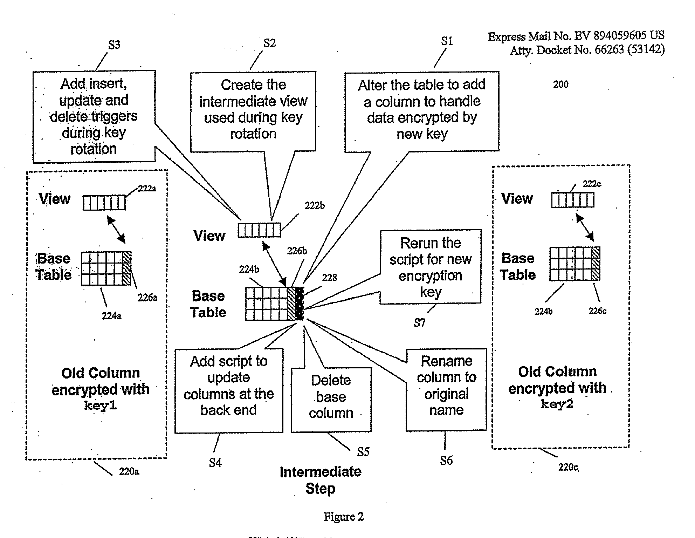

Referring now to Figure 2, a flowchart 200 is somewhat schematically represented along with portions of a database that illustrate concurrent access to sensitive data during various steps of encryption in accordance with an embodiment of the subject technology. A view 222a-c is a read only virtual or logical table composed of the result set of a query. In other words, a view 222a-c is a particular way of looking at a database 102. In a preferred embodiment of the invention, the view 222a-c is created by SQL Director, available from Protegrity Corp. of Stamford, Connecticut. A database 102 can support numerous different views 222a-c. Typically, a view 222a-c arranges the records in some order and makes only certain fields visible. Note that different views 222a-c do not typically affect the physical organization of the database but rather reflect the data contained therein. The query is a request for information to the database 102 where a base table 224a-c is stored. Changing the data in the base table 224a-c alters the data shown in the view 222a-c.

Initially at step S1 of method 200, data in a column or base column 226a of the base table 224a is encrypted with a key contained in the script key1. A view 222a also exists. For reasons discussed herein, it is desirable to re-encrypt the base column 226a with a key contained in the script key2. This general process is also known as key rotation. Box 220a depicts the view 222a and the base table 224a before re-encryption begins. Box 220c depicts the view 222c and base table 224c after re-encryption is complete. As shown between boxes 220a, 220c in Figure 2, an intermediate representation of the view 222b and base table 224b depict the state of data during encryption key rotation.

Still referring to Figure 2, the base table 224a may be of any size or shape as would be appreciated by those of ordinary skill in the pertinent art. For example, the base table 224a could be created with the allowing command:
create table base (v1 int primary key, v2 varchar2(11), v3 int);
In step S1, the base table 224a is altered to add a maintenance column 228. The maintenance column 228 stores a copy of the data in the base column 226a. For example, the maintenance column 228 could be created with the following command:
alter table base add (v4 raw(128));

In step S2, an intermediate view 222b is created of the base table 224b. Users and applications interacting with the database 102 will interact with the view 222b during encryption key rotation. An exemplary set of commands to accomplish this follows:
create view v (v1,v2,v3) as select v1,
decode (v2,null,pty.sel_decrypt_varchar2 ('key2' ,v4),pty.sel_decrypt_varc har2('key1',v2)) from base

In step S3, triggers are created to initiate an action when a specified event occurs. A trigger is a procedural code that is automatically executed in response to certain events on a particular table in a database. Triggers are needed to redirect data manipulation language (DML) commands from the view 222b to the table 224b, as the view 222b itself cannot be modified. Triggers are added to redirect INSERT, UPDATE and DELETE commands during encryption key rotation. An exemplary embodiment of an insert trigger is as follows:
create trigger v_ins instead of insert on v begin insert insert into base(v1,v2,v3,v4) values
(:new.v1,null,:new.v3,pty.ins_encrypt_varchar2('key2',:new.v4)); end;

An exemplary embodiment of an update trigger is as follows:
create trigger v_upd instead of update on v begin update base set v1=:new.v1, v2=null,
v3=:new.v3,v4=pty.upd_encrypt_varchar2('key2',:new.v2)
where v1=:old.v1;
end;

An exemplary embodiment of a delete trigger is as follows:
create trigger v_ins instead of insert on v begin pty.del_check('key2);
pty.del_check(key1);
insert into base (v1,v2,v3,v4)
values(:new.v1,nu11, :new.v3,pty.ins_encrypt_yarchar2('key2', :new.v4)); end;

Scripts and functions preceded by pty. are provided by the Protegrity Defiance DPS™ (previously known as Protegrity Secure.Data^{®}), available from Protegrity Corp. of Stamford, Connecticut.

In step S4, the maintenance column 228 is populated with data from the column for which the encryption key is being rotated. An embodiment of a script to perform this operation is as follows:
update base set
v4=pty.upd_encrypt_varchar2('key2',pty.se1_decrypt_yarchar2('key1',v2))
where v2 is not null;
end;

In steps S5 and S6, the base table 224b is modified by dropping the base column 226b and renaming the maintenance column 228 with base column's name by a command set as follows:
alter table base drop v2;
alter table base rename v4 to v2

At this point, step S7, a script is rerun for the new encryption key key2. The script replaces view 222b with view 222c and rewrites the triggers to redirect DML commands. As a result, the encrypted data in base column 224a has been re-encrypted without preventing access thereto or a need to bring the database 102 off-line.

Re-encryption of a database column involves iterating through every row (record) of the database. For a large database with millions of credit card numbers or other sensitive data, iterating through a column may require minutes or hours. Therefore, it is preferable that an index of the last row processed is maintained. This improves performance by reducing the need to read the database from the beginning if the re-encryption process is interrupted.

In an alternative embodiment that operates on a record or row by row basis, a record or row indicator index is maintained to indicate which records or rows have been processed. Any of these indexes may be stored in a separate table.

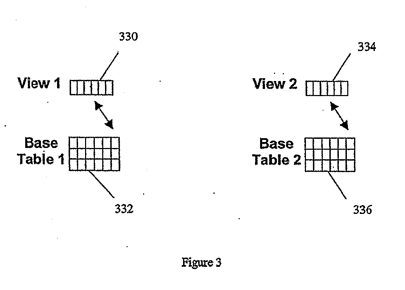

Referring now to Figure 3, a diagram showing two parallel tables 332, 336 in the database 102 and two corresponding parallel views 330, 334, respectively, are shown. In some embodiments, the second table 336 and view 334 are created only during key rotation. Additionally, in some embodiments, the data from the first table 332 is copied to the second table 336 after the data types of a plurality of columns, such as the encrypted columns, is converted to binary.

The duplicate or parallel tables 332, 336 are used to allow for encryption at the table level. For base tables 332, 336, with corresponding views 330, 334, respectively, triggers are created that are automatically executed in response to certain events on a particular table or view in a database. For example, the following pseudocode represents how to create a trigger for view1 330:
create trigger view1_ins instead of insert on view1 begin
   pty.ins_encrypt_varchar2
   protegrity.ins_rec_view2;
create trigger view1_upd instead of update on view1 begin
   pty.upd_encrypt_varchar2
   protegrity.coll_delupd_rec;
create trigger viewl_del instead of delete on view1 begin
   pty.del_check
   protegrity.coll_delupd_rec;

As a result, the trigger is fired when INSERT commands are executed for view1 that calls stored procedure ins_rec_view2. Triggers are also created to store DELETE and UPDATE commands in a table for later execution.

The following triggers are created for view2 334 (shown in pseudocode) as follows:
create trigger view2_ins instead of insert on view2 begin
   pty.ins_encrypt_varchar2
   protegrity.ins_rec_view1;
create trigger view2_upd instead of update on view2 begin
   pty.upd_encrypt_varchar2
   protegrity.coll_delupd_rec;
create trigger view2_del instead of delete on view2 begin
   pty.del_check
   protegrity.coll_delupd_rec;

As a result, the trigger is fired when INSERT commands are executed for view2 that calls stored procedure ins_rec_view1. Triggers are also created to store DELETE and UPDATE commands in a table for later execution.

The triggers herein call several functions and stored procedures from a key rotation package as described below. However, embodiments of this invention may be implemented with other software or hardware. Functions called herein include (functions shown in pseudocode):
procedure ins_rec_view2
   check if keyrotation is turned on or in progress
   (via function rotkey_base2)
   If true, insert record into view2
procedure ins_rec_view1
   check if keyrotation is turned on or in progress
   (via function rotkey_base1)
   If true, insert record into view1
procedure coll_delupd_rec
   Collects DML DELETE and UPDATE commands to be executed later by exe_pendingtran
function rotkey_base1
   Check if keyrotation is turned on for base1 and whether it is time for key rotation
   If true, use dbms_job to start the key rotation via t1_t2 or t2_t1 and update the flag for key rotation.
function rotkey_base2
   Check if keyrotation is turned on for base2 and whether it is time for key rotation
   If true, use dbms_job to start the key rotation via t1_t2 or t2_t1 and update the flag for key rotation.
procedure t1_t2
   Conduct background key rotation as described herein
   Copy data from t1 (i.e. base1) to t2 (i.e. base2)
   After completion, the key rotation table will have flag updating
   status after executing exe_pendingtran
procedure t2_t1
   Conduct background key rotation as described herein
   Copy data from t2 (i.e. base2) to t1 (i.e. base1)
   After completion, the key rotation table will have flag updating status after executing exe_pendingtran
procedure exe_pendingtran
   Queries the table populated by coll_delupd_rec
   Executes the update and delete commands

Two tables are used to support the functionality of this embodiment. In some embodiments, table keyrot may have the following fields:

| Field name: | Description: |
|---|---|
| Keyrot_owner | Table owner |
| Keyrot_tbl | Table name |
| Keyrot_date | Key rotation schedule date |
| Keyrot_status | Three values: |
| | - Current (not started) |
| | - Pending (database has been restarted during rotation) |
| | - Complete (key rotation complete) |
| Keyrot_start | Key rotation start timestamp |
| Keyrot_end | Key rotation end timestamp |

As shown herein, the field Keyrot_status represents or approximates a flag to indicate the key rotation status of one or more tables. The flag is updated by the functions, stored procedures and/or background processes to reflect the rotation status of the one or more tables. As also shown herein, a plurality of functions and stored procedure examine this flag during the course of operation.

In some embodiments, table pending tran may contain the following fields:

| Field name: | Description: |
|---|---|
| Keyrot_tbl | Table name (e.g. base1 or base2) |
| Sql_text | UPDATE and DELETE statements executed during key rotation |

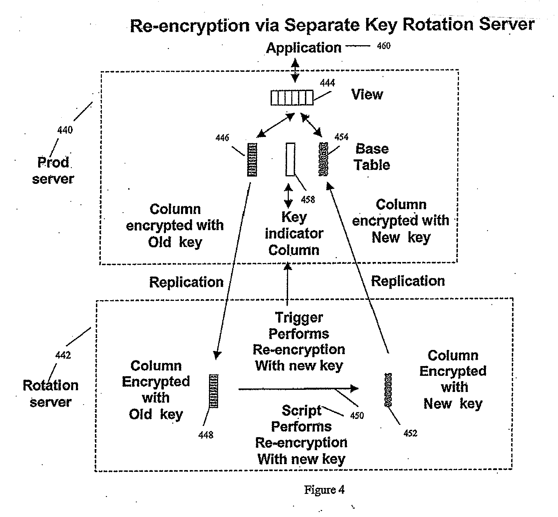

In an alternative embodiment, re-encryption is performed in a distributed manner. Figure 4 graphically represents two servers 440, 442 in which the re-encryption is distributed. The servers 440, 442 could operate in an environment 100 as described above with respect to Figure 1 or in a multitude of networking configurations as would be appreciated by those of ordinary skill in the art. One of the servers 440, 442 is a production server 440 and the other a rotation server 442. The production server 440 handles interactions with at least one application 460. The rotation server 442 may be designated solely for key rotation, or it may handle other tasks from other applications and/or data at rest systems serially or concurrently. Furthermore, the rotation server 442 may be a database server or any type of server capable of re-encryption. Additionally, load balancing among multiple rotation servers 442 is within the scope of this invention.

As in previous embodiments, a maintenance column 454 is added to the base table (not shown for simplicity) in the production server 440 and the base column 446 is replicated in the rotation server 442 shown as column 448. To allow use of the data by an application, an intermediate view 444 of the base table is created as well as one or more triggers to redirect DML commands.

Instead of performing re-encryption on the production server 442 as in other embodiments, at least one record from a base column is replicated on the rotation server 442. A script, denoted by arrow 450, on the rotation server 42 performs re-encryption with a new key. The at least one record, now a re-encrypted column 452, is then replicated to the maintenance column 454 of the base table on the production server 440. Replication may be implemented for an entire column or replication may occur in batches or on a record-by-record basis. Batch or record-by-record replication allow for an earlier introduction of data encrypted with the new key.

Additional structures must be provided so that the proper key for decryption can be identified. For example, a key indicator column 458 is added to the base table. The key indicator column 458 maintains a reference to the appropriate key for de-encryption of the data in the maintenance column 454.

Alternatively, a key generation indicator may be stored with the encrypted data in the maintenance column. This is also known as transparent storage because a separate column is not needed for storage of this indicator. Additional disk space also may not be not required. The key generation indicator may be prepended, appended or interspersed throughout the encrypted data. Alternatively, the key generation indicator may be incorporated with the encrypted data through the use of a hash function as is well know in the art. Furthermore, an integrity check may be stored with the key generation indicator to ensure that the key generation indicator is stored properly. The integrity check may be implemented with a variety of technologies know in the art, including but not limited to: CRC (cyclic redundancy check), hash, MD5, SHA-1, SHA-2, HMAC (keyed-hash message authentication code), partial-hash-value and parity checks.

The functions of several elements may, in alternative embodiments, be carried out by fewer elements, or a single element. Similarly, in some embodiments, any functional element may perform fewer, or different, operations than those described with respect to the illustrated embodiment. Also, functional elements (e.g., modules, databases, computers, clients, servers and the like) shown as distinct for purposes of illustration may be incorporated within other functional elements, separated in different hardware or distributed in a particular implementation.

While certain embodiments according to the invention have been described, the invention is not limited to just the described embodiments. Various changes and/or modifications can be made to any of the described embodiments without departing from the spirit or scope of the invention. Also, various combinations of elements, steps, features, and/or aspects of the described embodiments are possible and contemplated even if such combinations are not expressly identified herein.

## Claims

1. A method of encrypting at least a portion of a data at rest system with a new encryption key, the method comprising:
adding a maintenance column to a base table, wherein the base table contains data to be encrypted in one or more base columns;
creating a read only virtual table to act a proxy for the base table;
redirecting at least one command directed to the read only virtual table to the base table;
re-encrypting data of a column of the one or more base columns;
inserting the re-encrypted data into the maintenance column;
dropping the base column from which the data was re-encrypted; and
renaming the maintenance column with the name of the deleted base column.

2. The method of claim 1, wherein the data at rest system is a database.

3. The method of claim 2, wherein redirecting at least one command comprises redirecting at least one data manipulation language command.

4. The method of claim 2, wherein creating a read only virtual or logical table comprises creating a view composed of a result of a query of the base table.

5. The method of claim 2, wherein redirecting at least one command comprises creating one or more triggers.

6. The method of claim 2, wherein dropping the base column comprises deleting the base column.

7. The method of claim 1, further comprising executing a script for the new encryption key.

8. The method of claim 7, wherein the script is automatically generated.

9. The method of claim 1, wherein the method further comprises storing an index of the last row processed.

10. The method of claim 1, wherein the method further comprises storing indexes for one or more rows to indicate which rows have been updated.

11. The method of claim 10, wherein the one or more indexes are stored in a separate table.

12. A method of encrypting at least a portion of a data at rest system with a new encryption key, the method comprising:
adding a maintenance column to a base table, wherein the base table contains data to be encrypted in a base column;
creating a read only virtual table to act a proxy for the base table;
redirecting at least one command directed to the read only virtual table to the base table;
replicating at least one record from the base column to a rotation server;
re-encrypting at least one of the at least one record;
inserting the at least one re-encrypted record into the maintenance column;
deleting the base column from which the data was re-encrypted; and
renaming the maintenance column with the name of the deleted base column.

13. The method of claim 12 wherein the method includes storing a key generation indicator directing the read only virtual table to an encryption key for each row of the base column.

14. The method of claim 13, wherein the key generation indicator is selected from the group consisting of a transparent key generation indicator, a field in the base table, and data stored as a hash of the key generation indicator and the encrypted data for a record.

15. The method of claim 14, wherein the method includes storing an integrity check value for the key generation indicator.

16. The method of claim 15, wherein the integrity check value is implemented with a technology selected from the group consisting of: CRC (cyclic redundancy check), hash, MD5, SHA-1, SHA-2, HMAC (keyed-hash message authentication code), partial-hash-value and parity checks.

17. The method of claim 12, wherein a plurality of records are replicated to at least two rotation servers.

18. The method of claim 12, wherein the entire base column is replicated to the rotation server.

19. The method of claim 12, wherein the base column is replicated to the rotation server in batches.

20. The method of claim 12, wherein the base column is replicated to the rotation server in a record-by-record mode.

21. A method of altering encryption status of a first table and a second table in a relational database, the method comprising:
creating a trigger to intercept insert commands for the first table;
redirecting the intercepted insert commands to the second table;
creating triggers to intercept update and delete commands for the first table and store the commands in a temporary table;
rotating the encryption keys in the first table; and
executing the commands stored in the temporary table against the first table.

22. A computer-readable medium whose contents cause a computer to perform a method of encrypting at least a portion of a data at rest system with a new encryption key by the steps of:
adding a maintenance column to a base table, wherein the base table contains data to be encrypted in one or more base columns;
creating a read only virtual table to act a proxy for the base table;
redirecting at least one command directed to the read only virtual table to the base table;
re-encrypting data of a column of the one or more base columns;
inserting the re-encrypted data into the maintenance column;
dropping the base column from which the data was re-encrypted; and
renaming the maintenance column with the name of the deleted base column.

23. A computer-readable medium whose contents cause a computer to perform a method of encrypting at least a portion of a data at rest system with a new encryption key by the steps of:
adding a maintenance column to a base table, wherein the base table contains data to be encrypted in a base column;
creating a read only virtual table to act a proxy for the base table;
redirecting at least one command directed to the read only virtual table to the base table;
replicating at least one record from the base column to a rotation server;
re-encrypting at least one of the at least one record;
inserting the at least one re-encrypted record into the maintenance column;
deleting the base column from which the data was re-encrypted; and
renaming the maintenance column with the name of the deleted base column.

24. A computer-readable medium whose contents cause a computer to perform a method of encrypting at least a portion of a data at rest system with a new encryption key by the steps of:
creating a trigger to intercept insert commands for the first table;
redirecting the intercepted insert commands to the second table;
creating triggers to intercept update and delete commands for the first table and store the commands in a temporary table;
rotating the encryption keys in the first table; and
executing the commands stored in the temporary table against the first table.

25. A computer-readable memory device encoded with a data structure for re-encrypting at least one base column, while allowing access to the at least one base column during re-encryption, the data structure comprising a table, the table comprising:
at least one base column; and
at least one maintenance column.
